# EUROPEAN PATENT SPECIFICATION

(11) **EP 2 873 304 B1**
(45) Date of publication and mention of the grant of the patent: **11.09.2019**
(21) Application number: 13766686.3
(22) Date of filing: 10.07.2013
(51) Int. Cl.: H05B 37/03, G05B 19/408, G05B 23/02

(54) **SYSTEM AND METHOD FOR PROVIDING ADAPTIVE MEASUREMENT AND COORDINATED MAINTENANCE OF OUTDOOR LIGHTING SYSTEMS**
SYSTEM UND VERFAHREN ZUR BEREITSTELLUNG EINER ADAPTIVEN MESSUNG UND EINER KOORDINIERTEN WARTUNG VON AUSSENBELEUCHTUNGSSYSTEMEN
SYSTÈME ET PROCÉDÉ PERMETTANT DE PRODUIRE UNE MESURE ADAPTATIVE ET UNE MAINTENANCE COORDONNÉE DE SYSTÈMES D'ÉCLAIRAGE EXTÉRIEURS

(30) Priority: 10.07.2012 US 201261669939 P
(43) Date of publication of application: 20.05.2015
(73) Proprietor: Signify Holding B.V., 5656 AE Eindhoven (NL)
(72) Inventor: YANG, Yong, NL-5656 AE Eindhoven (NL); CAVALCANTI, Dave Alberto Tavares, NL-5656 AE Eindhoven (NL)
(74) Representative: Takken, Robert
(86) International application number: PCT/IB2013/055652
(87) International publication number: WO 2014/009888

(56) References cited:
- WO-A1-2011/072363
- WO-A1-2011/121470
- KR-A- 20090 083 789
- US-A1- 2004 002 792
- US-A1- 2004 124 338
- US-B1- 6 205 362
- MCCABE W J: "COMPUTER ANALYSIS OF GROUP RELAMPING", ILLUMINATING ENGINEERING, ILLUMINATING ENGINEERING SOCIETY, BALTIMORE, US, vol. 65, no. 5, 1 May 1970 (1970-05-01), pages 343-346, XP009041981, ISSN: 1019-2333

## Description

This application is related to the field of lighting network systems, and more particularly to a system to provide adaptive measure and coordinated maintenance for outdoor lighting systems.

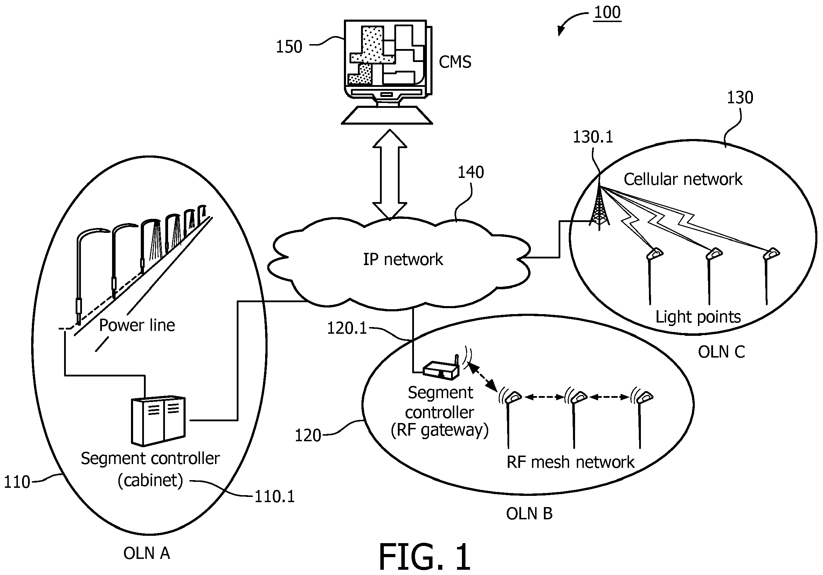

With advances in MEMS, computing, and communication technology, Outdoor Lighting Networks (OLNs) have been introduced by several companies to enable remote and intelligent management of outdoor lights. A conventional outdoor lighting management system 100, as show in Figure 1, may have a two-layer architecture. On the lower layer, light points are grouped into segments. Each segment forms an Outdoor Lighting Network (OLN) 110, 120, 130, which could be based on different communication technologies, such as power line or Radio Frequency (RF). On the upper layer, a Central Management System (CMS) 150 connects to the Segment Controllers (SCs) through IP networks 140, and manages the light points through the SCs. In practice, since the SCs 110.1, 120.1, 130.1 (of corresponding networks) are deployed in outdoor remote locations, the networks connecting the CMS and SCs may be wire-ed, wireless and/or cellular networks. The CMS 150 may also manage each light point directly if each light point (i.e., network element) is reachable through cellular networks.

From the prior art, other control systems are known, such as the distributed control system disclosed in US 6,205,362 B1, this system includes self-organizing components which are preselected on the basis of built in behaviors which are needed to perform a particular application. The built in behaviors enable the components to automatically self-organize and perform the application once coupled to the network. Such systems may in turn be used for monitoring and control.

Remote monitoring is one essential part of the outdoor lighting management to detect or predict failures. This remote monitoring relies on retrieving status measurements from remote OLNs. For example, burning hours, current, voltage and other attributes may be retrieved by the monitoring function. Meanwhile, other sensory data may also be collected from sensors attached on light points to support some smart city applications, such as traffic monitoring and pollution monitoring. Therefore, the networks (wire-ed, wireless and/or cellular) that relay the measurements from SCs 110.1, 120.1, 130.1, or light points to the CMS 150, become the bottlenecks for the communication, and constitute a major portion of the operation cost. For example, in a small city with 1000 light points, suppose that the CMS 150 collects one measurement sample of 80 bytes from each light point every 15 minutes, the total traffic is 230.4 MB per month. In practice, this number is usually much higher because of the messaging overhead. Then the annual cost for OLN measurements alone for a small city can be about $5,000 depending on the charges imposed by the (e.g., cellular) network provider.

In addition, maintenance is one of the most common and important operations for outdoor lights in a city. In practice, maintenance service could be provided by the customer (i.e., the city) or vendors. It could also be provided jointly by both the customer and vendors. For example, the customer may be responsible for cleaning and re-lamping devices while the vendors may maintain the network connectivity. In any of these maintenance models, however, the maintenance entities (customer, vendors) lack coordination because of the difficulties in OLN system integration and information sharing.

Hence, there is a need in the industry for a method and system to provide efficient communication in order to provide efficient management of the OLN in order to reduce network overhead and costs in maintaining the networks.

The present invention is set forth and characterized in the independent claims, while the dependent claims describe other characteristics of the invention or variants to the main inventive idea. In one aspect of the invention, a method for managing outside light networks comprising a plurality of network elements is disclosed. The method comprises the steps of identifying attributes of the network elements, grouping corresponding ones of said identified attributes into at least attribute group, collecting attribute data from selected ones of the network elements in each of the at least one attribute group, and determining a status of each attribute of network elements within the at least one attribute group based on the collected attribute data.

According to the invention, the amount of data collected among the elements within a group is limited by collecting data from selected ones of said network elements by defining a ratio M/N, wherein N is a number of elements in a corresponding attribute group and M is less than N; and for each element within a corresponding attribute group, generating a random number R, wherein R is in the range of 0 and 1; and transmitting a corresponding attribute value associated with the element when R < M/N.

In another aspect of the invention, there is disclosed a system for managing light networks comprising a plurality of network elements, the system comprising a receiving system receiving attribute information, a processor in communication with a memory, the memory including code which when accessed by the processor causes the processor to identify attributes of the network elements, group corresponding ones of said identified attributes into at least attribute group, collect attribute data from selected ones of the network elements in each of the at least one attribute group and determine a status of each attribute of network elements within the at least one attribute group based on the collected attribute data.

In still another aspect of the invention, there is disclosed a system comprising a plurality of vendors, each vendor managing a network of a plurality of network elements; the system comprising a receiving system receiving status information from each of the vendors, the information comprising at least selected attributes associated with elements within a corresponding network, monitoring the attribute information among each of the networks, generating at least one work order when a status of a corresponding attribute exceeds a threshold value, and coordinating the at least one work order among the vendors to satisfy said work order.

The advantages, nature, and various additional features of the invention will appear more fully upon consideration of the illustrative embodiments to be described in detail in connection with accompanying drawings wherein like reference numerals are used to identify like element throughout the drawings:
Figure 1 illustrates a conventional Command Management System (CMS);
Figure 2 illustrates an exemplary process in accordance with the principles of the invention.
Figure 3 illustrates a flow chart of an exemplary process in accordance with principles of the invention.
Figure 4 illustrate an exemplary message format in accordance with the principles of the invention.
Figure 5 illustrates an exemplary network configuration wherein different operators individually manage corresponding networks.
Figure 6 illustrates an exemplary implementation for providing efficient coordination among the different networks and operators.
Figure 7 illustrates an exemplary maintenance work flow process in accordance with the principles of the invention.
Figure 8 illustrates an exemplary maintenance coordination process in accordance with the principles of the invention.

It is to be understood that the figures and descriptions of the present invention described herein have been simplified to illustrate the elements that are relevant for a clear understanding of the present invention, while eliminating, for purposes of clarity many other elements. However, because these elements are well-known in the art, and because they do not facilitate a better understanding of the present invention, a discussion of such element is not provided herein. The disclosure herein is directed to also variations and modifications known to those skilled in the art.

In one aspect of the invention, reduction in overhead and associated costs may be achieved by reducing the amount of traffic from light points to the CMS, by eliminating the unnecessary measurement samples. For example, if two light points have the same luminaire that are installed within in a short time period, the load currents of two light points could be the same if their luminaires are working on the same dimming level. By using this correlation, samples of current of only one of the two light points may be taken and the single sample may be used for the two light points. The selection of which of the two luminaries samples may be made based on a selection of a fixed one of the two luminaries, on a round-robin basis (i.e., selection of a next luminary) or on a random basis.

The adaptive sampling method described herein is advantageous as adaptive sampling in outdoor lighting measurement represented correlation in the measurement dependent on the attributes of the lights, which are already available in the management system.

In addition, to the adaptive sampling described herein, data compression and/or data aggregation can also be used to reduce the amount of traffic from light points to the CMS. These methods are orthogonal to the method described of the invention herein, and, thus, may be used together to further save measurement cost.

Although the proposed method may be applied for collecting measurements for other OLN devices (e.g., temperature or ambient light sensors), the accuracy of the correlations in the sensor readings depends on the outdoor environment, which is hard to predict and quantify. Therefore, this invention focuses on discovering correlations in lighting related measurements.

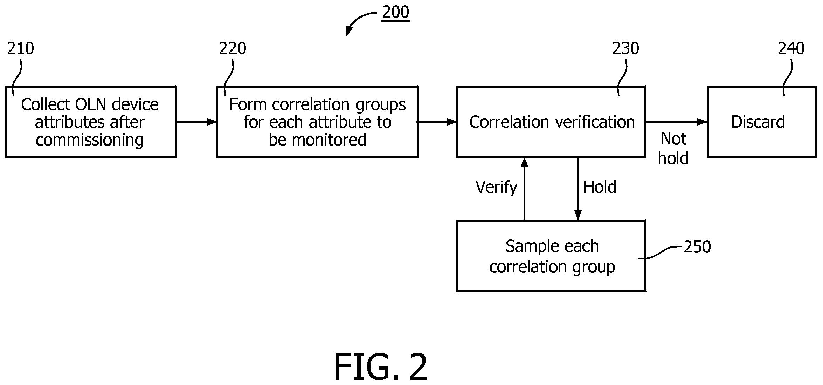

Figure 2 illustrates an exemplary process 200 in accordance with the principles of the invention. In this exemplary process OLN device or network element attributes are collected and stored in the CMS at block 210. Devices having a desired one of the attributes to be monitored are grouped into a corresponding correlation group at block 220. At block 230, a determination is made whether a correlation among the devices within the group indeed exists (i.e., verification). If the correlation does not hold or exist, the correlation group is discarded at block 240. However, if the correlation group is determined to be valid, then the adaptive methods described herein are used to sample elements in the correlation group at block 250.

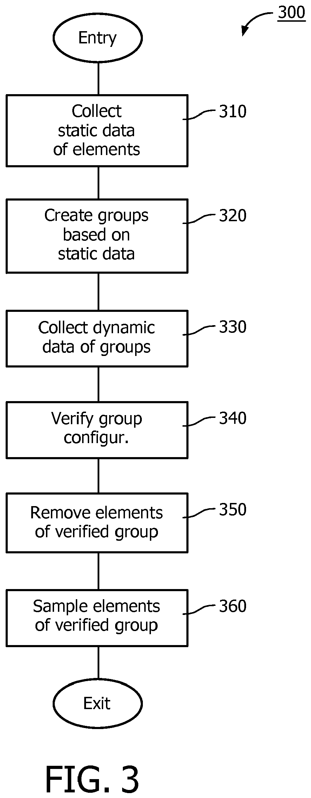

Figure 3 illustrates a flow chart of an exemplary process 300 in accordance with the principles of the invention. In this exemplary process, after an OLN device is deployed, its static features are collected at block 310. The collection may be performed manually, by installation engineers, or may be performed dynamically by the OLN device initiating a connection to the CMS to register its features (attributes). The static features that are collected may include a device type, a device address used by the CMS to identify and communicate with the device, an installation date, a name of the device, a manufacturer, a model number, a serial number, etc., as well as the location of the device. These static features (i.e., attributes) are static once the device is deployed. They will be only updated when a replacement or repair happens.

At block 320, the OLN device is incorporated into a group based on the static features or a group of devices may be formed based on the static features of the devices. For example, a group may be formed based on device type and date of installation. Other correlations groups may be formed based on manufacturer, for example.

At block 330, dynamic features of the elements or devices within the group are collected. The dynamic features or attribute values may be values such as load current, load voltage and output luminance, device temperature, environment temperature, etc.

At block 340, a verification of a correlation among the OLN devices or elements of the group is made. The OLN devices within each correlation group should have strong correlations in the values of the attribute(s) forming the group. For example, a correlation group for load current may be built based on the model and the dimming levels of the luminaires, while a correlation group for load voltage could be built based on the segment of the power grid to which the devices are connected.

Devices in which a correlation has been determined to not be strong are removed from the group. These removed devices are then group-ed with other similar devices at block 350. The group process repeats until the devices within the network are included in at least one group.

At block 360 the OLN devices or elements in the correlation group are then sampled. Sampling may be performed using one or more of a plurality of methods. For example, the sampling may randomly chose one or more devices from the group to sample or the samples may be selected from one or more devices in a round-robin manner. Thus, a limited number of samples are provided to the CMS that define the characteristics of the group. In addition, the limited number of samples may also be used to provide further verification of the strong correlation among the elements within the group.

In another exemplary aspect of the invention, the sampling may be set up using a schedule wherein given a group of N devices, a sub-set of M devices may be sampled every period P. In this case, the CMS may send the information regarding (M, N) to the devices in the group. Within each period of P, each device within the group generates a randomly number R. For example the devices may implement an even distribution in (0, 1).

The device may then determine whether R <M/N, or R > M/N. If the device determines that R<M/N, then the device reports the corresonding attribute to the CMS. Otherwise the device does not report the attribute. In this way, by probability, there will be M out of the N devices in the group that reports its attribute to the CMS. Therefore, for each dynamic attribute to be monitored, an OLN device maintains 3 parameters: M, N and P, which are configured by messages from the CMS.

Accordingly, the overhead in sampling the attributes of the group is significantly reduced as only M devices of a group of N device is providing attribute data. Use of probabilistic method of determining which devices reports corresponding attributes also provides further distribution of the elements providing reports. For example, if three attributes are to be reported, then rather that a select number of devices reporting their three attributes, each of M devices reports the attribute(s) associated with the group. Hence, the combined number of attributes may be received from significantly larger.

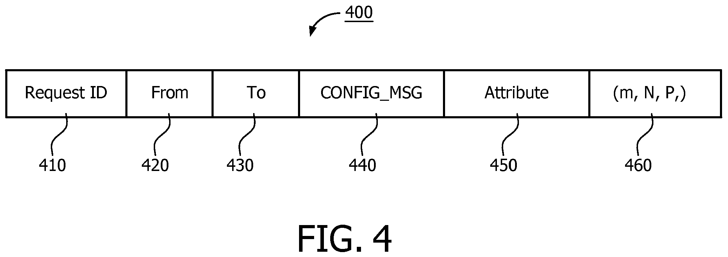

Figure 4 illustrates an exemplary message format for communicating the sampling information from the CMS to the OLN device within the group. In this case, a request identification is provided at block 410. Address information regarding sender and receiver is provided at blocks 420 and 430, respectively. At block 440 a configuration message format is provided and at block 450 the desired attribute is provided. At block 460 the parameters for the sampling (M, N, P) are provided.

As would be appreciated, different attributes may be provided at different periods (P), using a different number of devices (M) within the group of N devices. Thus, for a group formed based on two attributes, for example, each attribute may be provided to the CMS at a different rate and from different devices (M).

Hence, according to this exemplary aspect of the invention, the sampling of the attributes of the OLN device may be spaced during a desired period of time rather than being collected at the start of the desired period of time (i.e., interrogation).

In another important aspect of OLN management, the method for reducing communication between OLN devices and the CMS described herein is also applicable to the maintenance of the OLN. In many maintenance models, the maintenance entities lack coordination because of the difficulties in OLN system integration and information sharing.

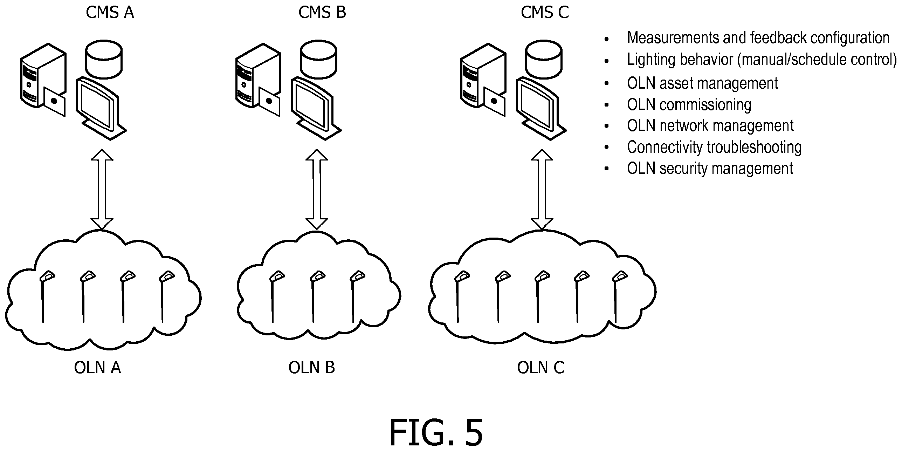

Figure 5 illustrates an exemplary network configuration wherein different operators (CMS A, CMS B, CMS C) individually manage corresponding networks OLN A, OLN B and OLN C. The attributes of each of these networks may be collected as previously discussed with regard to features such as burn hours, current and voltage loading bye each of the individual CMS operators.

However, when there is overlap in the maintenance of the OLN devices among the networks the information necessary for efficient maintenance is not properly correlated among the different operators.

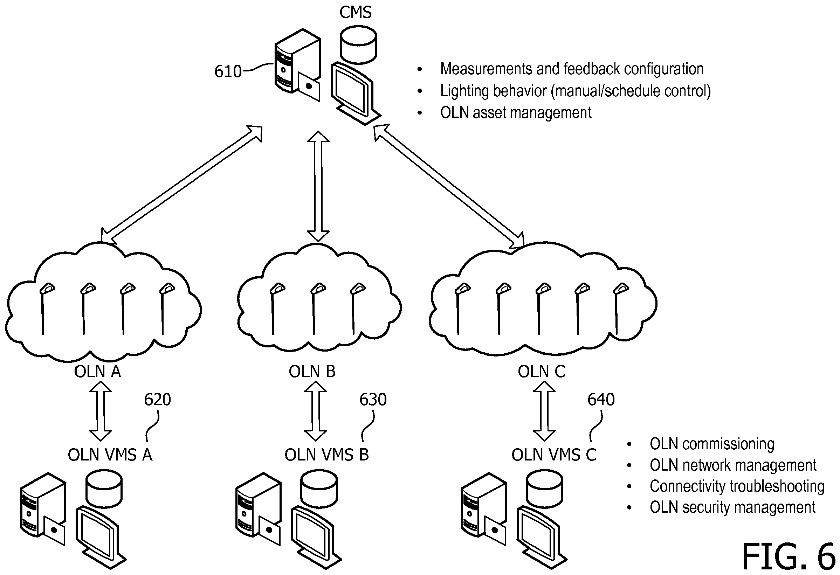

Figure 6 illustrates an exemplary implementation for providing efficient coordination among the different networks and operators.

In this exemplary configuration, CMS 610 is further in communication with the selected ones of the elements in each of networks OLN A, OLN B, OLN C, which are managed by corresponding Vendor Management System VMS A 620, VMS-B 630, VMS-C 640. CMS 610 (and the VMSs), as previously discussed group the devices within corresponding OLNs and receives sampled data from the devices within the corresponding OLN. CMS 610 may then coordinate the maintenance of the devices with the corresponding network operator (VMS) responsible for the network. In addition, each VMS 620, 630, 640 may also utilize the grouping and sampling methods described herein in order to monitor OLN status and determine need for OLN device maintenance while reducing communication overhead.

Accordingly, both the CMS 610 and each VMS 620, 630, 640 may receive sample information from a desired number of devices within groups within corresponding networks to determine whether the devices are in need of maintenance or predict when maintenance may be necessary.

The advantage of coordinating OLN maintenance is obvious. For example, if two nearby lights fail, one maintenance team may be sent to fix them both lights, in order to save the travel cost of the team. If the two lights are maintained by two entities (e.g., two vendors), then the two entities may share the maintenance information and then try to coordinate the repair effort. The problem of OLN maintenance coordination exists when OLNs are monitored and maintained by different entities. In practice, this indeed happens because cities choose products from different manufactures/vendors and also different areas/segments (e.g., roadway or parks) are managed by different entities.

Hence, in accordance with the principles of the invention , each VMS dynamically configures the attributes of the OLN devices (e.g., segment controllers, lighting points, luminaires and sensors) that are exposed to the CMS 610 in their corresponding network, as previously described. The CMS 610 may, thus, discover attributes of OLN devices, as previously described, and the OLN devices within groups designated by the corresponding VMS may receive status to reports from the CMS 610, as indicated by a provided schedules. Similarly, the VMS 620, 630, 640, may report status to the CMS regarding the OLN devices in corresponding networks.

For example, the VMS 620, 630, 640 may provide for a higher reporting rate from a higher number devices in a corresponding network, wherein the CMS 610 may provide for a lower reporting rate from a lower number of devices among the networks. The VMS 620, 630, 640 and the CMS 610 may then use different projection models to predict potential failures and/or the need to perform maintenance.

To detect or predict abnormalities (e.g., degradation, failures) of devices within the OLNs, collection of attribute values from OLN devices, such as segment controllers, lighting points, luminaires and sensors is required. As previously discussed, Table 1 shows an example of the attributes of light points that are to be collected. These values represent both static and dynamic values of the devices, and does not represent the total range of attributes that may be collected.

**Table 1 -Attributes.**

| **Attribute** | **Description** |
|---|---|
| Device Type | Indicates the type of device: Light Point. |
| CMS Address | The unique application layer address used for by the CMS to identify and communicate with the devices. |
| Name | Text name of the device |
| Geolocation | The geographic information such as longitude and latitude coordinates. May also include street names, and types. |
| Luminaire | Type, model, and manufacturer of the luminaire |
| Dimming Level | Zero means the device is off. This can be used to calculate burning hours and then predict the residual lifetime. |
| Load Current | May be used to detect lamp anomaly behavior. |
| Load Voltage | May be used to detect lamp anomaly behavior. |
| Lamp Temperature | The temperature inside the lamp. |
| Controller Current | May be used to detect controller anomaly behavior. |
| Controller Voltage | May be used to detect controller anomaly behavior. |
| Controller Temperature | The temperature of the lamp controller. |

In one aspect of the invention, the CMS 610 can establish direct connections to an OLN device to collect its attribute information. However, the CMS 610 may only have access to some of the attributes, while other attributes are only visible to the VMS 620, 630, 640. For example, the load current and voltage could be disclosed to the customer, (e.g., CMS) while the controller current and voltage may be protected by the vendor (VMS).

In another embodiment, the CMS may only communicate with OLN devices through the corresponding VMS 620, 630, 640, where the VMS itself acts like an OLN device. Again, the VMS may only disclose some of attributes of its associated OLN devices to the CMS 610. In either of these embodiments, the VMS 620, 630, 640 needs to configure the visibility of the device attributes. Note that in another embodiment of the invention as shown in Figure 1, all attributes are collected by the vendor and this visibility configuration is not needed.

Attribute visibility may be pre-configured from the factory. It can also be configured during either the commission phase or the operation phase. During commissioning, the device can send the list of its attributes to either the VMS 620, 630, 640 by the commissioning tool used by the installation crew. Then the VMS 620, 630, 640 or the commissioning tool will reply to the device with a list of attributes that are allowed to publish to the CMS 610. During the operation phase, the VMS may dynamically change the visibility of the device attributes by sending enabling or disabling message to the device.

After a device determines the information of the CMS 610 as well as the list of attributes visible to the CMS 610, it may initiate a connection to the CMS 610 to register itself with the published attributes. Also, the device may be manually registered by a commissioning engineer, who uploads the information to the CMS 610. Then the CMS 610 will initiate a connection to the device to confirm the attribute lists.

During operation, when the visibility of attributes is changed, the OLN device will send a notification to the CMS 610. If a new attribute becomes visible (e.g., a new type of measurement capability), the OLN device will notify the CMS 610. If the CMS 610 is currently measuring one attribute that is determined to be invisible, the device will also generate an error message.

Both the CMS and VSM may request an OLN device to report the status of its attributes, as previously described. If a measurement is required by both the CMS and a VMS, the device may only send it to the VMS 620, 630, 640 and then indicate in the message that this measurement needs to be forwarded to the CMS by the VMS. Since both the CMS 610 and VMSs 620, 630, 640 are typically servers on the internet, this method will save the bottlenecked uplinks from the devices to the servers.

Device attribute values can not only be used to detect failures, but also to predict failures. Both the CMS 610 and VMS 620, 630, 640 could have their own models to detect and predict failures based on the information they collected, and then generate work orders with specific priorities and required crew specialties.

For example, with the specified light lifetime and collected burning hour information, the CMS 610 may predict the residual lifetime of the light, which gradually decreases as a function of the burning hours. That is, the CMS 610 or VMS 620, for example, may determine, based on collected information, a trend and predicate when the trend exceeds a threshold value. The threshold value may indicate a failure or close to a failure condition.

Thus, if a group of lights within vicinity has relatively the same residual lifetime, they may be maintained together. On the other hand, VMS 620, 630, 640 may have access to more information, for example lamp temperature. A VMS 620, 630, 640 may use this information to predict the lighting output performance and decide to replace a lamp if its output falls below a threshold

In another aspect of the invention, the CMS 610 and VMS 620, 630, 640 may coordinate a work flow in providing for the maintenance of the devices within the group and/or network. The priority of work orders depends not only on the failure type, but also on the geolocation. If a light point on a major road or an intersection fails, it should have higher priority to be fixed than a light point failure on a rural road. The priority of different area types can be derived from standards and regulations. Also, if traffic information is collected through the OLNs, the priority could be set proportional to the amount of traffic.

Both the CMS 610 and VMS 620, 630, 640 can generate work orders based on the OLN data they collected.

Thus, if the maintenance service is provided by a central agency, then all the work orders generated by the CMS 610 and VMS 620, 630, 640 can be integrated together and have the maintenance crew dispatched accordingly.

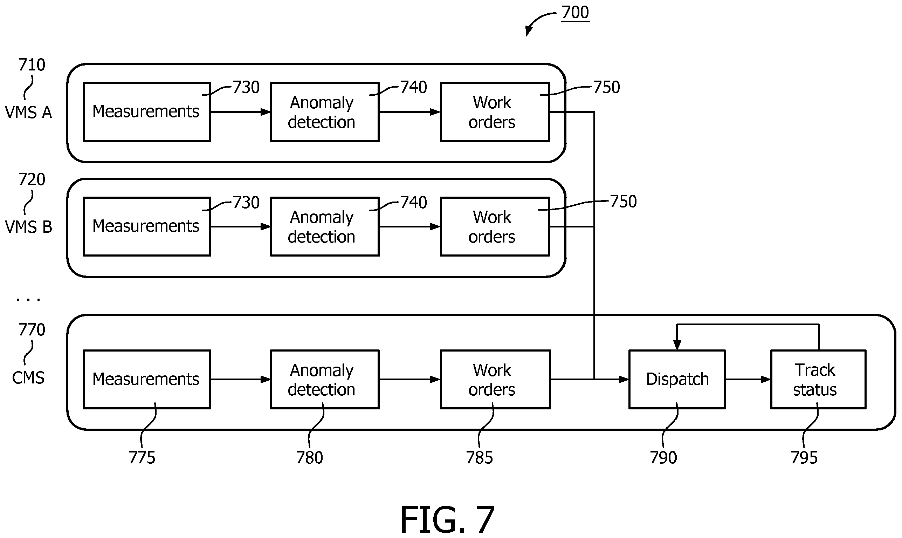

Figure 7 illustrates an exemplary work order process 700 in accordance with the principles of the invention. In this illustrated example, if the maintenance service is provided by multiple entities (e.g., different vendors, VMS A, VMS B) with their own maintenance crew, then the coordination between the maintenance entities is needed.

For example, each of vendors VMS A 710 and VMS B 720 may determine characteristics of elements in their corresponding network by taking measurements (or collecting data) 730 of attributes of the network elements as has been described with regard to Figure 3, for example.

Each of the vendors 710, 720 may further determine abnormalities (or the potential of an abnormality occurring) in the elements of the corresponding network 740, also as previously described, and generate work orders 750.

In this exemplary case, information regarding the abnormalities and the work orders may be provided to a CMS unit 770 to coordinate the activities necessary to complete the work orders. The CMS unit 770 may also collect data from network elements 775, determine abnormalities 780 and generate work orders 785.

The CMS 770 may then dispatch crews to correct the abnormality or provide schedules to one or more the VMS 710,720 in order to coordinate the dispatching of crews to timely correct the abnormalities with a high efficiency. Thus, with the coordination of the CMS, VMS 710 720 may schedule personnel to be dispatched at an appropriate time.

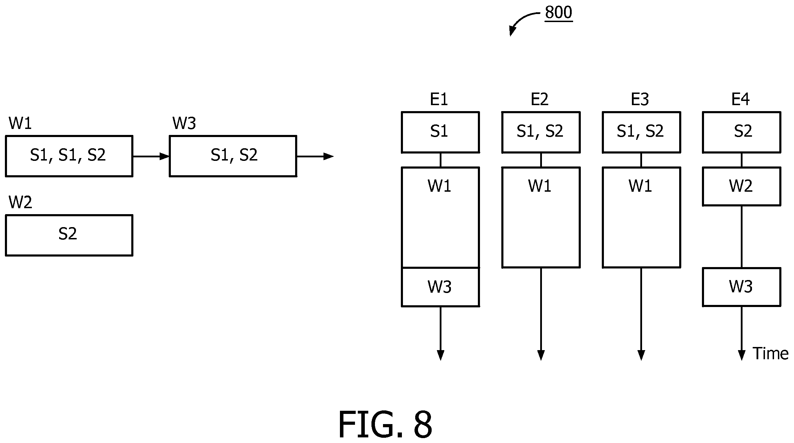

Figure 8 illustrates an example process for coordinating the efforts among a plurality of maintenance entities to provide efficient coordination among the entities. Each entity has a list of engineers who have their own specialties. Each work order has the types and numbers of crew specialties required. For example, work order W1 needs two specialties S1 and one S2. Then the engineer E1, E2 and E3 can be dispatched to work on W1. Moreover, since W2 is independent of W1, the engineer E4 can be dispatched to work on W2. However, W3 can only be started when W1 is finished.

In this exemplary example, after a work order is generated, it is submitted to its designated maintenance entity. Each entity may use a scheduling algorithm to schedule its own work orders. Besides, it also maintains a list of its work order and the corresponding status, such as SCHEDULED, ONGOING, READY to be scheduled, or WAITING on other work orders. Moreover, each scheduled work order may have a flexibility time frame, within which it is flexible to be started anytime without affecting the overall work order scheduling. For example, as show in Figure 8, work order W2 will have the flexibility to be started any time as long as it can be finished no later than work order W1.

Maintenance entities may share their lists of its work orders as well as the status and flexibility time frame through a publish/subscribe manor. For example, each entity may publish the list on its website or an open database, or send new work orders to other entities that have subscribed a specific type of work orders (e.g., within an specific area or with a specific work type).

Each entity examines its scheduled work orders with scheduled and ongoing work orders from other entities. If the entity finds a potential to coordinate, the entity will initiate a negotiation with the other entity. A potential to coordinate could be that two work orders are at very close locations, and their flexibility allows time frames overlap. Then the two work orders could be scheduled to be concurrent so that they can share equipment or reduce the disruption on traffic.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer(s), or a special processor(s) or in programmable or dedicated hardware(s), such as an ASIC or FPGA. As would be understood in the art, the computer(s), the processor(s), microprocessor controller(s) or the programmable hardware(s) include memory components, e.g., RAM, ROM, Flash, etc. that may store or receive software or computer code that when accessed and executed by the computer(s), processor(s) or hardware(s) implement the processing methods described herein. In addition, it would be recognized that when a general purpose computer(s) accesses code for implementing the processing shown herein, the execution of the code transforms the general purpose computer(s) into a special purpose computer(s) for executing the processing shown herein.

While there has been shown, described, and pointed out fundamental and novel features of the present invention as applied to preferred embodiments thereof, it will be understood that various omissions and substitutions and changes in the apparatus described, in the form and details of the devices disclosed, and in their operation, may be made by those skilled in the art without departing from the scope of the present claims.

It is expressly intended that all combinations of those elements that perform substantially the same function in substantially the same way to achieve the same results are within the scope of the invention. Substitutions of elements from one described embodiment to another are also fully intended and contemplated.

## Claims

1. A method for managing an outdoor lighting network (110,120,130) using a central management system, the outdoor lighting network (OLN) comprising a plurality of OLN devices, the method comprising:
identifying attributes of the OLN devices, wherein identified attributes are selected from a group of static attributes relating to a OLN device, wherein the static attributes are selected from a group consisting of: device type, device name, device location, device model, and device manufacturer;
the central management system grouping OLN devices having corresponding ones of said identified attributes into at least one attribute group, wherein said grouping further comprises: verifying a correlation among attributes within an attribute group, further comprising removing attributes lacking correlation among said attributes within said attribute group;
the central management system collecting attribute data from selected ones of the OLN devices in each of the at least one attribute group, wherein collecting attribute data further comprises collecting dynamic attribute data relating to a OLN device, wherein said dynamic attribute data is selected from a group consisting of: dimming level, load current, load voltage, and temperature;
the central management system determining a status of each attribute of OLN devices within the at least one attribute group based on the collected attribute data from the selected ones;
the method being **characterized in that**:
the collecting of the attribute data from selected ones of said OLN devices is performed at a known period, P and comprises: defining a ratio M/N, wherein N is a number of devices in a corresponding attribute group and M is less than N; and for each device within a corresponding attribute group generating a random number R, wherein R is in the range of 0 and 1; and when R < M/N, transmitting a corresponding attribute value associated with the respective device.

2. The method according to claim 1, wherein multiple outdoor lighting networks are managed (110,120,130), each network having a different respective vendor (620,630,640), and said method further comprising:
generating a work order when said determined status of a corresponding attribute exceeds a threshold value; and
coordinating said work order among two or more vendors (620,630,640) to satisfy said work order.

3. A central management system for managing an outdoor lighting network (110,120,130), the outdoor lighting network (OLN) comprising a plurality of OLN devices, the central management system comprising:
a receiving system arranged to receive attribute information of the OLN devices;
a processor in communication with a memory, the memory including code which when accessed by the processor causes the processor to:
identify attributes of the OLN devices, wherein identified attributes are selected from a group of static attributes relating to a OLN device, wherein the static attributes are selected from a group consisting of: device type, device name, device location, device model, and device manufacturer;
group OLN devices having corresponding ones of said identified attributes into at least attribute group, wherein said grouping further comprises: verifying a correlation among attributes within an attribute group, further comprising removing attributes lacking correlation among said attributes within said attribute group;
collect attribute data from selected ones of the OLN devices in each of the at least one attribute group, wherein collecting attribute data further comprises collecting dynamic attribute data relating to a OLN device, wherein said dynamic attribute data is selected from a group consisting of: dimming level, load current, load voltage, and temperature;
determine a status of each attribute of OLN devices within the at least one attribute group based on the collected attribute data from the selected ones;
the central management system being **characterized in that**:
the collecting of the attribute data from selected ones of said OLN devices is performed at a known period, P and comprises: defining a ratio M/N, wherein N is a number of devices in a corresponding attribute group and M is less than N; and for each device within a corresponding attribute group generating a random number R, wherein R is in the range of 0 and 1; and when R < M/N, transmitting a corresponding attribute value associated with the respective device.

4. The system according to claim 3, wherein the central management system manages multiple outdoor lighting networks (110,120,130), each network having a different respective vendor (620,630,640)
the processor further:
generates a work order when said determined status of a corresponding attribute exceeds a threshold value; and
coordinating said work order among two or more vendors (620,630,640) to satisfy said work order.

## Patentansprüche

1. Verfahren zum Verwalten eines Außenbeleuchtungsnetzwerks (110, 120, 130) unter Verwendung eines zentralen Verwaltungssystems, wobei das Außenbeleuchtungsnetzwerk (OLN) eine Vielzahl von OLN-Vorrichtungen umfasst, wobei das Verfahren umfasst:
Identifizierungsattribute der OLN-Vorrichtungen, wobei identifizierte Attribute ausgewählt sind aus einer Gruppe von statischen Attributen, die sich auf eine OLN-Vorrichtung beziehen, wobei die statischen Attribute ausgewählt sind aus einer Gruppe, bestehend aus: Vorrichtungstyp, Vorrichtungsbezeichnung, Vorrichtungsposition, Vorrichtungsmodell und Vorrichtungshersteller;
wobei das zentrale Verwaltungssystem OLN-Vorrichtungen mit entsprechenden der identifizierten Attribute in mindestens eine Attributgruppe gruppiert, wobei die Gruppierung weiter umfasst: Überprüfen einer Korrelation zwischen Attributen innerhalb einer Attributgruppe, weiter umfassend das Entfernen von Attributen, die keine Korrelation zwischen den Attributen innerhalb der Attributgruppe aufweisen;
wobei das zentrale Verwaltungssystem Attributdaten von ausgewählten der OLN-Vorrichtungen in jeder der mindestens einen Attributgruppen erfasst, wobei das Erfassen von Attributdaten weiter das Erfassen von dynamischen Attributdaten in Bezug auf eine OLN-Vorrichtung umfasst, wobei die dynamischen Attributdaten aus einer Gruppe ausgewählt sind, die besteht aus: Dimmwert, Laststrom, Lastspannung und Temperatur;
wobei das zentrale Verwaltungssystem einen Status jedes Attributs von OLN-Vorrichtungen innerhalb der mindestens einen Attributgruppe basierend auf den erfassten Attributdaten der ausgewählten Vorrichtungen bestimmt;
wobei das Verfahren **dadurch gekennzeichnet ist, dass**:
das Erfassen der Attributdaten von ausgewählten der OLN-Vorrichtungen in einem bekannten Zeitraum, P, durchgeführt wird und umfasst: Definieren eines Verhältnisses M/N, wobei N eine Anzahl von Vorrichtungen in einer entsprechenden Attributgruppe ist und M kleiner als N ist; und für jede Vorrichtung innerhalb einer entsprechenden Attributgruppe, Erzeugen einer Zufallszahl R , wobei R im Bereich zwischen 0 und 1 liegt; und wenn R < M/N, Übertragen eines entsprechenden Attributwerts, der der jeweiligen Vorrichtung zugeordnet ist.

2. Verfahren nach Anspruch 1, wobei mehrere Außenbeleuchtungsnetzwerke verwaltet werden (110, 120, 130), wobei jedes Netzwerk einen anderen jeweiligen Anbieter (620, 630, 640) aufweist, und wobei das Verfahren weiter umfasst:
Erzeugen eines Arbeitsauftrags, wenn der bestimmte Status eines entsprechenden Attributs einen Schwellenwert überschreitet; und
Koordinieren des Arbeitsauftrags zwischen zwei oder mehreren Anbietern (620, 630, 640), um den Arbeitsauftrag zu erfüllen.

3. Zentrales Verwaltungssystem zur Verwaltung eines Außenbeleuchtungsnetzwerks (110, 120, 130), wobei das Außenbeleuchtungsnetzwerk (OLN) eine Vielzahl von OLN-Vorrichtungen umfasst, wobei das zentrale Verwaltungssystem umfasst:
ein Empfangssystem, das zum Empfangen von Attributinformationen der OLN-Vorrichtungen eingerichtet ist;
einen Prozessor in Kommunikation mit einem Speicher, wobei der Speicher einen Code beinhaltet, der beim Zugriff durch den Prozessor den Prozessor dazu veranlasst:
Attribute der OLN-Vorrichtungen zu identifizieren, wobei identifizierte Attribute ausgewählt sind aus einer Gruppe von statischen Attributen, die sich auf eine OLN-Vorrichtung beziehen, wobei die statischen Attribute ausgewählt sind aus einer Gruppe, bestehend aus: Vorrichtungstyp, Vorrichtungsbezeichnung, Vorrichtungsposition, Vorrichtungsmodell und Vorrichtungshersteller;
wobei die Gruppen-OLN-Vorrichtungen entsprechende der identifizierten Attribute in mindestens einer Attributgruppe aufweisen, wobei die Gruppierung weiter umfasst: Überprüfen einer Korrelation zwischen Attributen innerhalb einer Attributgruppe, weiter umfassend das Entfernen von Attributen, die keine Korrelation zwischen den Attributen innerhalb der Attributgruppe aufweisen;
Erfassen von Attributdaten von ausgewählten der OLN-Vorrichtungen in jeder der mindestens einen Attributgruppen, wobei das Erfassen von Attributdaten weiter das Erfassen von dynamischen Attributdaten in Bezug auf eine OLN-Vorrichtung umfasst, wobei die dynamischen Attributdaten aus einer Gruppe ausgewählt sind, die besteht aus: Dimmwert, Laststrom, Lastspannung und Temperatur;
Bestimmen eines Status jedes Attributs von OLN-Vorrichtungen innerhalb der mindestens einen Attributgruppe basierend auf den erfassten Attributdaten der ausgewählten Vorrichtungen;
wobei das zentrale Verwaltungssystem **dadurch gekennzeichnet ist, dass**:
das Erfassen der Attributdaten von ausgewählten der OLN-Vorrichtungen in einem bekannten Zeitraum, P, durchgeführt wird und umfasst: Definieren eines Verhältnisses M/N, wobei N eine Anzahl von Vorrichtungen in einer entsprechenden Attributgruppe ist und M kleiner als N ist; und für jede Vorrichtung innerhalb einer entsprechenden Attributgruppe, Erzeugen einer Zufallszahl R , wobei R im Bereich zwischen 0 und 1 liegt; und wenn R < M/N, Übertragen eines entsprechenden Attributwerts, der der jeweiligen Vorrichtung zugeordnet ist.

4. System nach Anspruch 3, wobei das zentrale Verwaltungssystem mehrere Außenbeleuchtungsnetzwerke (110, 120, 130) verwaltet, wobei jedes Netzwerk einen anderen jeweiligen Anbieter (620, 630, 640) aufweist,
wobei der Prozessor weiter:
einen Arbeitsauftrag erzeugt, wenn der bestimmte Status eines entsprechenden Attributs einen Schwellenwert überschreitet; und
den Arbeitsauftrag zwischen zwei oder mehreren Anbietern (620, 630, 640) koordiniert, um den Arbeitsauftrag zu erfüllen.

## Revendications

1. Procédé pour gérer un réseau d'éclairage extérieur (110, 120, 130) en utilisant un système de gestion central, le réseau d'éclairage extérieur (OLN) comprenant une pluralité de dispositifs OLN, le procédé comprenant :
l'identification d'attributs des dispositifs OLN, dans lequel les attributs identifiés sont choisis parmi un groupe d'attributs statiques se rapportant à un dispositif OLN, dans lequel les attributs statiques sont choisis parmi un groupe constitué de : type de dispositif, nom de dispositif, localisation de dispositif, modèle de dispositif, et fabricant de dispositif ;
le système de gestion central groupant les dispositifs OLN ayant des attributs correspondants parmi lesdits attributs identifiés dans au moins un groupe d'attributs, dans lequel ledit groupement comprend en outre : la vérification d'une corrélation parmi les attributs au sein d'un groupe d'attributs, comprenant en outre l'élimination des attributs dépourvus de corrélation parmi lesdits attributs au sein dudit groupe d'attributs ;
le système de gestion central collectant des données d'attribut à partir de dispositifs choisis parmi les dispositifs OLN dans chacun parmi l'au moins un groupe d'attributs, dans lequel la collecte de données d'attribut comprend en outre la collecte de données dynamiques d'attribut se rapportant à un dispositif OLN, dans lequel lesdites données dynamiques d'attribut sont choisies dans un groupe constitué de : niveau de gradation, courant de charge, tension de charge et température ;
le système de gestion central déterminant un état de chaque attribut de dispositifs OLN au sein de l'au moins un groupe d'attributs sur la base des données d'attribut collectées à partir de ceux choisis ;
le procédé étant **caractérisé en ce que** :
la collecte des données d'attribut à partir de ceux choisis parmi lesdits dispositifs OLN est mise en oeuvre à une période connue, P et comprend : la définition d'un rapport M/N, dans lequel N est un nombre de dispositifs dans un groupe d'attributs correspondant et M est inférieur à N ; et, pour chaque dispositif au sein d'un groupe d'attributs correspondant, la génération d'un nombre aléatoire R, dans lequel R est dans la plage de 0 et 1 ; et lorsque R < M/N, la transmission d'une valeur d'attribut correspondante associée au dispositif respectif.

2. Procédé selon la revendication 1, dans lequel de multiples réseaux d'éclairage extérieur sont gérés (110, 120, 130), chaque réseau ayant un fournisseur respectif différent (620, 630, 640), et ledit procédé comprenant en outre :
la génération d'un ordre de travail lorsque ledit état déterminé d'un attribut correspondant dépasse une valeur seuil ; et
la coordination dudit ordre de travail parmi deux fournisseurs ou plus (620, 630, 640) pour satisfaire ledit ordre de travail.

3. Système de gestion central pour gérer un réseau d'éclairage extérieur (110, 120, 130), le réseau d'éclairage extérieur (OLN) comprenant une pluralité de dispositifs OLN, le système de gestion central comprenant :
un système de réception agencé pour recevoir des informations d'attribut des dispositifs OLN ;
un processeur en communication avec une mémoire, la mémoire incluant un code qui, lorsque le processeur y accède, amène le processeur à :
identifier des attributs des dispositifs OLN, dans lequel les attributs identifiés sont choisis parmi un groupe d'attributs statiques se rapportant à un dispositif OLN, dans lequel les attributs statiques sont choisis parmi un groupe constitué de : type de dispositif, nom de dispositif, localisation de dispositif, modèle de dispositif, et fabricant de dispositif ;
grouper les dispositifs OLN ayant des attributs correspondants parmi lesdits attributs identifiés dans au moins un groupe d'attributs, dans lequel ledit groupement comprend en outre : la vérification d'une corrélation parmi les attributs au sein d'un groupe d'attributs, comprenant en outre l'élimination des attributs dépourvus de corrélation parmi lesdits attributs au sein dudit groupe d'attributs ;
collecter des données d'attribut à partir de dispositifs choisis parmi les dispositifs OLN dans chacun parmi l'au moins un groupe d'attributs, dans lequel la collecte de données d'attribut comprend en outre la collecte de données dynamiques d'attribut se rapportant à un dispositif OLN, dans lequel lesdites données dynamiques d'attribut sont choisies dans un groupe constitué de : niveau de gradation, courant de charge, tension de charge et température ;
déterminer un état de chaque attribut de dispositifs OLN au sein de l'au moins un groupe d'attributs sur la base des données d'attribut collectées à partir de ceux choisis ;
le système de gestion central étant **caractérisé en ce que** :
la collecte des données d'attribut à partir de ceux choisis parmi lesdits dispositifs OLN est mise en oeuvre à une période connue, P et comprend : la définition d'un rapport M/N, dans lequel N est un nombre de dispositifs dans un groupe d'attributs correspondant et M est inférieur à N ; et, pour chaque dispositif au sein d'un groupe d'attributs correspondant, la génération d'un nombre aléatoire R, dans lequel R est dans la plage de 0 et 1 ; et lorsque R < M/N, la transmission d'une valeur d'attribut correspondante associée au dispositif respectif

4. Système selon la revendication 3, dans lequel le système de gestion central gère de multiples réseaux d'éclairage extérieur (110, 120, 130), chaque réseau ayant un fournisseur respectif différent (620, 630, 640) le processeur en outre :
génère un ordre de travail lorsque ledit état déterminé d'un attribut correspondant dépasse une valeur seuil ; et
coordonne ledit ordre de travail parmi deux fournisseurs ou
plus (620, 630, 640) pour satisfaire ledit ordre de travail.
